# EUROPÄISCHE PATENTANMELDUNG

(11) **EP 1 884 632 A2**
(43) Veröffentlichungstag der Anmeldung: **06.02.2008**
(21) Anmeldenummer: 07014378.9
(22) Anmeldetag: 21.07.2007
(51) Int. Cl.: F01N 3/20, F01N 3/28

(54) **Katalysatorvorrichtung für benzinbetriebene Otto-Motoren**

(30) Priorität: 02.08.2006 DE 102006035957
(71) Anmelder: GAT Katalysatoren GmbH, 45966 Gladbeck (DE)
(72) Erfinder: Amft, Karl, 45966 Gladbeck (DE)
(74) Vertreter: Lelgemann, Karl-Heinz

(57) **Zusammenfassung**

Eine Katalysatorvorrichtung (1) für benzinbetriebene OttoMotoren hat einen Katalysatorkörper (2), der aus einem Substrat als Träger für eine Edelmetallbeschichtung und der Edelmetallbeschichtung ausgebildet ist.

Um eine derartige Katalysatorvorrichtung mit einem vergleichsweise geringen wirtschaftlichen Aufwand herzustellen, wobei die Katalysatorvorrichtung den gesetzlich vorgegebenen Anforderungsprofilen genügen muss, wird vorgeschlagen, dass das Substrat des Katalysatorkörpers (2) zumindest teilweise aus Silizium-Karbid (SIC)-Schaumkeramik ausgebildet ist.

## Beschreibung

Die Erfindung bezieht sich auf eine Katalysatorvorrichtung für benzinbetriebene Otto-Motoren, mit einem Katalysatorkörper, der aus einem Substrat als Träger für eine Edelmetallbeschichtung und der Edelmetallbeschichtung ausgebildet ist.

Bei bekannten derartigen Katalysatorvorrichtungen für benzinbetriebene Otto-Motoren werden bereits keramische oder metallische Trägerwerkstoffe als Substrat eingesetzt.

Der Erfindung liegt die Aufgabe zugrunde, eine Katalysatorvorrichtung für benzinbetriebene Otto-Motoren der eingangs geschilderten Art zu schaffen, die mit einem geringeren technischen und wirtschaftlichen Aufwand herstellbar ist und die den derzeit und zukünftig denkbaren gesetzlichen Anforderungen an die Qualität der Abgasnachbehandlung besser genügt als die aus dem Stand der Technik bekannten Katalysatorvorrichtungen.

Diese Aufgabe wird erfindungsgemäß dadurch gelöst, dass das Substrat des Katalysatorkörpers zumindest teilweise aus Silizium-Karbid (SIC)-Schaumkeramik ausgebildet ist. Diese SIC-Schaumkeramik kann in einfacher Weise hergestellt werden, wobei darüber hinaus bei der Herstellung derartiger SIC-Schaumkeramiken deren Porosität quasi beliebig vorgegeben werden kann. Durchgeführte Versuche haben gezeigt, dass mit erfindungsgemäß ausgestalteten Katalysatorkörpern hervorragende Ergebnisse bei der Abgasnachbehandlung von benzinbetriebenen Otto-Motoren erzielt wurden.

Vorteilhaft kann der Katalysatorkörper in Strömungsrichtung des Abgases aufeinander folgende, edelmetallbeschichtete Substratscheiben aufweisen. Hierdurch sind an die jeweiligen Abgas- und Temperaturverhältnisse in optimaler Weise angepasste Abgasnachbehandlungsbereiche innerhalb des Katalysatorkörpers in der gewünschten Reihenfolge ausbildbar.

Gemäß einer vorteilhaften Ausführungsform der Katalysatorvorrichtung hat der Katalysatorkörper eingangsseitig eine handelsübliche, aus dem Stand der Technik bekannte Substratscheibe. An diese Substratscheibe schließen sich dann aus SIC-Schaumkeramik bestehende Substratscheiben an.

Gemäß einer weiteren vorteilhaften Ausführungsform hat der Katalysatorkörper eingangsseitig eine Substratscheibe aus einer SIC-Schaumkeramik mit vergleichsweise großen Poren, z.B. einer Porosität von ca. 30 ppi (pores per inch).

Die Abmessung der eingangsseitigen Substratscheibe des Katalysatorkörpers kann in Strömungsrichtung des Abgases ca. zweimal so groß sein wie die stromab angeordneter Substratscheiben.

Des Weiteren ist es möglich, dass der Katalysatorkörper in Strömungsrichtung des Abgases stromab seiner eingangsseitigen Substratscheibe eine Substratscheibe aus einer SIC-Schaumkeramik mit vergleichsweise großen Poren, z.B. einer Porosität von ca. 30 ppi, aufweist, wobei die SIC-Schaumkeramik dieser stromab der eingangsseitigen Substratscheibe angeordneten Substratscheibe der der ggf. vorhandenen Substratscheibe mit der SIC-Schaumkeramik entspricht.

Gemäß einer weiteren vorteilhaften Ausführungsform hat der Katalysatorkörper in Strömungsrichtung des Abgases stromab seiner Substratscheibe bzw. seiner Substratscheiben aus der SIC-Schaumkeramik mit vergleichsweise großen Poren zumindest eine Substratscheibe aus einer SIC-Schaumkeramik mit vergleichsweise mittelgroßen Poren, z.B. einer Porosität von ca. 40 ppi.

Die Abmessung der Substratscheibe aus der SIC-Schaumkeramik mit vergleichsweise mittelgroßen Poren kann in Strömungsrichtung des Abgases ca. zweimal so groß sein wie die stromauf oder stromab angeordneter Substratscheiben.

Gemäß einer weiteren vorteilhaften Ausführungsform der erfindungsgemäßen Katalysatorvorrichtung hat der Katalysatorkörper in Strömungsrichtung des Abgases stromab seiner Substratscheibe bzw. seiner Substratscheiben aus der SIC-Schaumkeramik mit vergleichsweise großen und ggf. seiner Substratscheibe aus der SIC-Schaumkeramik mit vergleichsweise mittelgroßen Poren zumindest eine Substratscheibe aus einer SIC-Schaumkeramik mit vergleichsweise kleinen Poren, z.B. einer Porosität von ca. 50 ppi.

Die Abmessung der Substratscheibe aus der SIC-Schaumkeramik mit vergleichsweise kleinen Poren kann in Strömungsrichtung des Abgases ca. zweimal so groß sein wie die stromauf angeordneter Substratscheiben.

Die Substratscheiben des Katalysatorkörpers können mittels eines eingangsseitigen und eines ausgangsseitigen Axialgeweberings innerhalb eines Katalysatorgehäuses der Katalysatorvorrichtung sowohl in Axial- als auch in Radialrichtung gehaltert sein.

Um sicherzustellen, dass das Abgas den Katalysatorkörper in dessen gesamter Erstreckung in Strömungsrichtung des Abgases durchströmt, ist es zweckmäßig, wenn die Substratscheiben des Katalysatorkörpers zwischen dem eingangsseitigen Axialgewebering, dem Katalysatorgehäuse und dem ausgangsseitigen Axialgewebering von einer Lager- bzw. Blähmatte umhüllt sind, wobei zwischen der Lager- bzw. Blähmatte einerseits und den Substratscheiben andererseits eine vergleichsweise dünne, gasdichte Matte angeordnet ist. Mittels dieser vergleichsweise dünnen, gasdichten Matte wird ein Eindringen von Abgasen in die Lager- bzw. Blähmatte verhindert, wobei die Lager- bzw. Blähmatte zum Ausgleich von temperaturbedingten Volumenänderungen dienen kann.

Anstelle oder zusätzlich zu der vergleichsweise dünnen, gasdichten Matte können die Poren der Substratscheiben an deren zylindrischen Außenmantelfläche mittels einer aus dem Werkstoff der Substratscheiben bestehenden Schicht geschlossen sein. Diese kann z.B. in einem zusätzlichen Verfahrensschritt aufgebracht werden.

Im Folgenden wird die Erfindung anhand von Ausführungsformen unter Bezugnahme auf die Zeichnung näher erläutert.

### Es zeigen:

- Figur 1: einen Querschnitt durch eine erfindungsgemäße Katalysatorvorrichtung;
- Figur 2: einen Längsschnitt durch eine erste Ausführungsform der erfindungsgemäßen Katalysatorvorrichtung;
- Figur 3: einen Querschnitt durch eine zweite Ausführungsform der erfindungsgemäßen Katalysatorvorrichtung; und
- Figur 4: einen Querschnitt durch eine dritte Ausführungsform der erfindungsgemäßen Katalysatorvorrichtung.

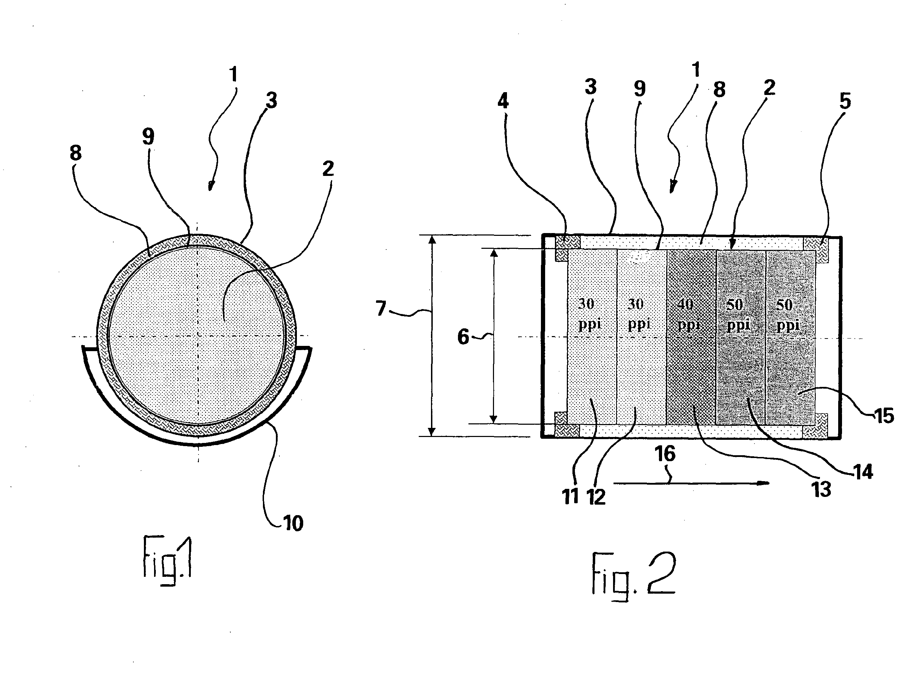

Eine anhand der Figuren 1 bis 4 in verschiedenen Ausführungsformen dargestellte erfindungsgemäße Katalysatorvorrichtung 1 dient dazu, die Abgase benzinbetriebener Otto-Motoren zu reinigen.

Die Katalysatorvorrichtung 1 hat einen Katalysatorkörper 2, der innerhalb eines Katalysatorgehäuses 3 gehaltert ist. Wie sich aus den Figuren 2 bis 4 ergibt, sind zur Halterung des Katalysatorkörpers 2 innerhalb des Katalysatorgehäuses 3 ein eingangsseitiger Axialgewebering 4 und ein ausgangsseitiger Axialgewebering 5 vorgesehen. Die beiden Axialgeweberinge 4, 5 haltern den Katalysatorkörper 2 sowohl in Axialrichtung als auch in Radialrichtung des Katalysatorgehäuses 3. Zwischen dem eingangsseitigen Axialgewebering 4 und dem ausgangsseitigen Axialgewebering 5 ist im Zwischenraum zwischen der Außenmantelfläche des einen Außendurchmesser 6 aufweisenden Katalysatorkörpers 2 und der Innenmantelfläche des einen Innendurchmesser 7 aufweisenden Katalysatorgehäuses 3 eine Lager- bzw. Blähmatte 8 vorgesehen, die durch eine Insulfraxpapierschicht 9 vom Katalysatorkörper 1 getrennt ist. Mittels der beiden Axialgeweberinge 4, 5 und der Insulfraxpapierschicht 9 wird das Eindringen von Abgasen in die Lager- bzw. Blähmatte verhindert, so dass die Abgase den Katalysatorkörper 2 durch dessen gesamte Erstreckung in Strömungsrichtung der Abgase durchtreten.

Wie aus Figur 1 hervorgeht, ist die Katalysatorvorrichtung 1 bzw. das Katalysatorgehäuse 3 mit einem Hitzeschild 10 versehen.

Bei der in Figur 2 gezeigten Ausführungsform besteht der Katalysatorkörper 2 aus fünf Substratscheiben 11, 12, 13, 14, 15, die in Strömungsrichtung der Abgase aufeinander folgen und die im Wesentlichen die gleichen Außenabmessungen aufweisen. Die fünf Substratscheiben 11, 12, 13, 14, 15 bestehen aus einem Substrat als Träger für eine geeignete Edelmetallbeschichtung und der Edelmetallbeschichtung, wobei das Substrat jeweils aus Silizium-Karbid (SIC)-Schaumkeramik ausgebildet ist.

Die in der durch den Pfeil 16 gekennzeichneten Strömungsrichtung der Abgase eingangsseitige erste Substratscheibe 11 besteht aus einer SIC-Schaumkeramik, die vergleichsweise große Poren aufweist. Die Porosität der SIC-Schaumkeramik kann z.B. 30 ppi (pores per inch) betragen.

Die in Strömungsrichtung 16 der Abgase gesehen zweite Substratscheibe 12 besteht aus demselben edelmetallbeschichteten Substrat wie die eingangsseitige erste Substratscheibe 11. Die auf die zweite Substratscheibe 12 folgende dritte Substratscheibe 13 besteht aus einer SIC-Schaumkeramik mit vergleichsweise mittelgroßen Poren und hat z.B. eine Porosität von ca. 40 ppi. Die bei der Ausführungsform gemäß Figur 2 auf die dritte Substratscheibe 13 folgende vierte Substratscheibe 14 sowie die darauf folgende fünfte, ausgangsseitige Substratscheibe 15 bestehen aus einer SIC-Schaumkeramik mit vergleichsweise kleinen Poren und haben z.B. eine Porosität von ca. 50 ppi.

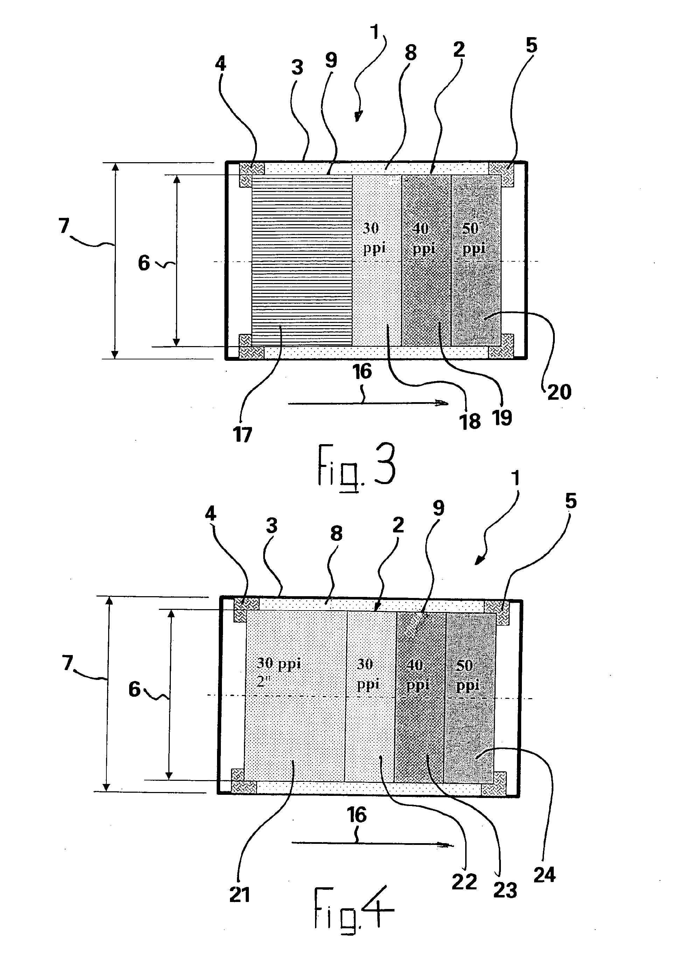

Im Falle der in Figur 3 gezeigten Ausführungsform der erfindungsgemäßen Katalysatorvorrichtung 1 hat der Katalysatorkörper 2 eine eingangsseitige erste Substratscheibe 17, die als herkömmliches Substrat ausgebildet ist und in geeigneter Weise edelmetallbeschichtet ist. Die erste bzw. eingangsseitige Substratscheibe 17 erstreckt sich in der durch den Pfeil 16 gezeigten Strömungsrichtung der Abgase etwa doppelt so weit wie die weiteren Substratscheiben 18, 19, 20 der in Figur 3 gezeigten Ausführungsform der Katalysatorvorrichtung 1. Die in Strömungsrichtung 16 stromab der eingangsseitigen ersten Substratscheibe 17 angeordnete zweite Substratscheibe 18 besteht aus der SIC-Schaumkeramik mit vergleichsweise großen Poren und kann entsprechend eine Porosität von ca. 30 ppi aufweisen. Die stromab der zweiten Substratscheibe 18 angeordnete dritte Substratscheibe 19 besteht aus der SIC-Schaumkeramik mit vergleichsweise mittelgroßen Poren und kann demgemäß eine Porosität von ca. 40 ppi aufweisen. Die darauf folgende vierte, ausgangsseitige Substratscheibe 20 besteht aus einer SIC-Schaumkeramik mit vergleichsweise kleinen Poren und kann demgemäß eine Porosität von ca. 50 ppi aufweisen.

Im Falle der in Figur 4 gezeigten Ausführungsform der erfindungsgemäßen Katalysatorvorrichtung hat der Katalysatorkörper 2 anstelle der herkömmlich ausgebildeten Substratscheibe 17 eine eingangsseitige erste Substratscheibe 21, deren Erstreckung in der durch den Pfeil 16 angezeigten Strömungsrichtung der Abgase doppelt so groß ist wie die der weiteren Substratscheiben 22, 23, 24 der in Figur 4 gezeigten Ausführungsform, wobei die weiteren Substratscheiben 22, 23, 24 hinsichtlich ihrer Ausgestaltung den Substratscheiben 18, 19 bzw. 20 der in Figur 3 gezeigten Ausführungsform entsprechen.

Die eingangsseitige erste Substratscheibe 21 der in Figur 4 gezeigten Ausführungsform besteht - wie die darauf folgende zweite Substratscheibe 22 - aus der SIC-Schaumkeramik mit vergleichsweise großen Poren und weist demgemäß eine Porosität von ca. 30 ppi auf.

Mit den erfindungsgemäß aus SIC-Schaumkeramik ausgebildeten Substratscheiben bzw. dem entsprechend gestalteten Katalysatorkörper 2 lassen sich für benzinbetriebene Otto-Motoren besonders günstige Ergebnisse bei der Abgasnachbehandlung erreichen.

## Patentansprüche

1. Katalysatorvorrichtung für benzinbetriebene Otto-Motoren, mit einem Katalysatorkörper (2), der aus einem Substrat als Träger für eine Edelmetallbeschichtung und der Edelmetallbeschichtung ausgebildet ist, **dadurch gekennzeichnet, dass** das Substrat des Katalysatorkörpers (2) zumindest teilweise aus Silizium-Karbid (SIC)-Schaumkeramik ausgebildet ist.

2. Katalysatorvorrichtung nach Anspruch 1, bei der der Katalysatorkörper (2) in Strömungsrichtung (16) des Abgases aufeinander folgende, edelmetallbeschichtete Substratscheiben (11, 12, 13, 14, 15; 17, 18, 19, 20; 21, 22, 23, 24) aufweist.

3. Katalysatorvorrichtung nach Anspruch 1 oder 2, bei der der Katalysatorkörper (2) eingangsseitig eine herkömmlich ausgebildete Substratscheibe (17) aufweist.

4. Katalysatorvorrichtung nach Anspruch 1 oder 2, bei der der Katalysatorkörper (2) eingangsseitig eine Substratscheibe (11; 21) aus einer SIC-Schaumkeramik mit vergleichsweise großen Poren, z.B. einer Porosität von ca. 30 ppi (pores per inch), aufweist.

5. Katalysatorvorrichtung nach einem der Ansprüche 2 bis 4, bei der die Abmessung der eingangsseitigen Substratscheibe (17; 21) des Katalysatorkörpers (2) in Strömungsrichtung (16) des Abgases ca. zweimal so groß ist wie die stromab angeordneter Substratscheiben (18, 19, 20; 22, 23, 24).

6. Katalysatorvorrichtung nach einem der Ansprüche 2 bis 5, bei der der Katalysatorkörper (2) in Strömungsrichtung (16) des Abgases stromab seiner eingangsseitigen Substratscheibe (11; 17; 21) eine Substratscheibe (12; 18; 22) aus einer SIC-Schaumkeramik mit vergleichsweise großen Poren, z.B. einer Porosität von ca. 30 ppi, aufweist.

7. Katalysatorvorrichtung nach einem der Ansprüche 2 bis 6, bei der der Katalysatorkörper (2) in Strömungsrichtung (16) des Abgases stromab seiner Substratscheibe (18) bzw. seiner Substratscheiben (11, 12; 21, 22) aus der SIC-Schaumkeramik mit vergleichsweise großen Poren zumindest eine Substratscheibe (19; 13; 23) aus einer SIC-Schaumkeramik mit vergleichsweise mittelgroßen Poren, z.B. einer Porosität von ca. 40 ppi, aufweist.

8. Katalysatorvorrichtung nach Anspruch 7, bei der die Abmessung der Substratscheibe aus der SIC-Schaumkeramik mit vergleichsweise mittelgroßen Poren in Strömungsrichtung (16) des Abgases ca. zweimal so groß ist wie die stromauf oder stromab angeordneter Substratscheiben.

9. Katalysatorvorrichtung nach einem der Ansprüche 4 bis 8, bei der der Katalysatorkörper (2) in Strömungsrichtung (16) des Abgases stromab seiner Substratscheibe (18) bzw. seiner Substratscheiben (11, 12; 21, 22) aus der SIC-Schaumkeramik mit vergleichsweise großen und ggf. seiner Substratscheibe (19; 14; 23) aus der SIC-Schaumkeramik mit vergleichsweise mittelgroßen Poren zumindest eine Substratscheibe (20; 15; 24) aus einer SIC-Schaumkeramik mit vergleichsweise kleinen Poren, z.B. einer Porosität von ca. 50 ppi, aufweist.

10. Katalysatorvorrichtung nach Anspruch 9, bei der die Abmessung der Substratscheibe aus der SIC-Schaumkeramik mit vergleichsweise kleinen Poren in Strömungsrichtung des Abgases ca. zweimal so groß ist wie die stromauf angeordneter Substratscheiben.

11. Katalysatorvorrichtung nach einem der Ansprüche 2 bis 10, bei der die Substratscheiben (11, 12, 13, 14, 15; 17, 18, 19, 20; 21, 22, 23, 24) des Katalysatorkörpers (2) mittels eines eingangsseitigen (4) und eines ausgangsseitigen Axialgeweberings (5) innerhalb eines Katalysatorgehäuses (3) gehaltert sind.

12. Katalysatorvorrichtung nach Anspruch 11, bei der die Substratscheiben des Katalysatorkörpers (2) zwischen dem eingangsseitigen Axialgewebering (4), dem Katalysatorgehäuse (3) und dem eingangsseitigen Axialgewebering (5) von einer Lager- bzw. Blähmatte (8) umhüllt sind, wobei zwischen der Lager- bzw. Blähmatte (8) einerseits und den Substratscheiben andererseits eine vergleichsweise dünne, gasdichte Matte (9) angeordnet ist.

13. Katalysatorvorrichtung nach Anspruch 11 oder 12, bei der die Substratscheiben des Katalysatorkörpers (2) zwischen dem eingangsseitigen Axialgewebering (4), dem Katalysatorgehäuse (3) und dem eingangsseitigen Axialgewebering (5) von einer bzw. der Lager- bzw. Blähmatte (8) umhüllt sind, wobei die Poren der Substratscheiben an deren zylindrischen Außenmantelfläche mittels einer aus dem Werkstoff der Substratscheiben bestehenden Schicht geschlossen sind.
